# EUROPEAN PATENT SPECIFICATION

(11) **EP 1 504 675 B1**
(45) Date of publication and mention of the grant of the patent: **03.01.2007**
(21) Application number: 03749991.0
(22) Date of filing: 07.05.2003
(51) Int. Cl.: A23L 1/00, A23L 1/22, A23G 3/00, A23G 4/00, A23L 1/09, A23L 1/236

(54) **POWDER COMPOSITION**
PULVERZUSAMMENSETZUNG
COMPOSITION EN POUDRE

(30) Priority: 08.05.2002 JP 2002132666
(43) Date of publication of application: 09.02.2005
(73) Proprietor: Takasago International Corporation, Tokyo-to 144-8721 (JP)
(72) Inventor: GOTO, Yukio, Takasago International Corporation, Hiratsuka-shi, Kanagawa 254-0073 (JP); TANAKA, Shigeru, Takasago International Corp., Hiratsuka-shi, Kanagawa 254-007 (JP); ISHII, Hiroshi, Takasago International Corporation, Hiratsuka-shi, Kanagawa 254-0073 (JP)
(74) Representative: Behnisch, Werner
(86) International application number: PCT/JP2003/005714
(87) International publication number: WO 2003/094630

(56) References cited:
- EP-A2- 1 023 842
- EP-A2- 1 159 882
- WO-A-01/89313
- WO-A-99/26485

## Description

### Technical Field

The present invention relates to a powder composition containing trehalose, which is preferable for use as an agent for giving aroma and flavor to various foods and drinks, particularly powder drinks and chewing gums, or for enhancing aroma and flavor of such various foods and drinks, as well as foods or drinks containing the powder composition.

### Background of the Invention

Various substances such as flavor, color materials and functional substances have traditionally been added so far to various foods and drinks in order to enhance the taste or in order to give or enhance aroma and flavor and to give color and enhance the functions. Desirably, these additive substances are in powder or granule from the standpoints of efficient expression, easy handling and the stability of the additive substances.

As the method for making these additive substances into powder or granule, various methods have been known, including adsorption method onto saccharide such as lactose, spray-drying method and granulation method. Various materials have also been known as powdering agents, granulation agents and coating agents for use in these methods. Additionally, new methods and materials are also proposed. One of typical methods for powdering additive substances readily volatile or readily modifiable (unstable components), such as flavors, spice oils, spice oleoresin and composite compositions thereof, color materials and functional substances is a method for preparing an extrafine powder in a capsule form, including a step of emulsifying these substances in natural gums such as gum arabic, solutions of proteins such as gelatin or saccharide solutions of processed starches such as dextrin and saccharides such as monosaccharides, disaccharides and polysaccharides and a subsequent step of spray drying the resulting emulsions, to prepare an encapsulated extrafine powder, where the additive substances as core substances are coated with the natural gums, proteins, modified starches, saccharides and the like (referred to as "microencapsulation method" hereinafter). However, powders obtained by the microencapsulation method using natural gums, proteins, modifieded starches and saccharides as coating materials tend to demonstrate hygroscopic. Concurrently, the powders have poor storage stability, disadvantageously, so that various problems emerge such that volatiles substances such as flavor components vaporize to cause the change of the components or such that the color modification or quality modification of color materials and functional substances occur with heat, light or oxidation. In order to overcome these problems, various methods have been proposed, including a process of additionally coating the powdered additive substances with hardened oils of animals and vegetables, synthetic fats and oils and resins. However, other additional problems occur, such as the increase of the production steps including double coating.

As another method for powdering additive substances, a method for producing a glassy powder in a powder form where a core substance is included in a carbohydrate matrix is known, the method including a step of uniformly mixing the core substance in the molten carbohydrate matrix with a small amount of a plasticizer, a step of extruding, cooling and solidifying the resulting molten mixture if necessary, and a step of grinding the resulting solidified matter to obtain the glassy powder (referred to as "extrusion method" hereinafter).

For example, the specification of U.S. Patent No. 3,704,137 describes that an essential oil composition is obtained by mixing an oil with an antioxidant, separately mixing water, sugar and a hydrolyzed starch product of 20 or less DE (abbreviation of dextrose equivalent; direct percentage of reducing sugar on a glucose basis in the hydrolyzed product) together, emulsifying the resulting two mixtures together, extruding the resulting mixture into a bar form in a solvent, eliminating excess of the solvent, and finally adding a caking inhibitor. Additionally, published Japanese translation of a PCT application (Tokuhyo) 61-502656 describes to obtain a solid composition of an essential oil flavoring agent by heating an aqueous mixture of saccharide, a hydrolyzed starch product and a selected emulsifier to the melting points of the individuals of the aqueous mixture, combining and kneading an essential oil flavoring agent with the aqueous mixture to form a homogenous molten matter, extruding the homogenous molten matter in a relatively cool medium to form a solid extrusion-molded matter, grinding the solid matter and drying the resulting matter, and binding a caking inhibitor to the matter. Further, JP-B-63-24652 describes that edible oil is encapsulated with a sugar mixture at a specific mass ratio of a hydrolyzed starch product of 5 to 12 DE and sucrose. The specification of U.S. Patent No. 4,820,534 describes a method for producing an inclusion matter with a volatile flavor included in a glassy matrix, the method including a step of mixing a trace component obtained from water-soluble carbohydrates such as fructose with a base material composed of a polymeric carbohydrate such as maltodextrin with DE of 20 or more and additionally with volatile flavor, without any water addition, a step of heating the resulting mixture in an extruder of single screw type at the glass transition temperature of the base material or a higher temperature, and a step of extrusion, cooling and molding.

In order to obtain a carbohydrate matrix stable to the temperature and humidity under storage by the extrusion method, the amount of plasticizers such as water in the carbohydrate matrix blended with unstable components as the core substances is required to be sufficiently small. When the amount of plasticizers is reduced, the molten viscosity of the matrix is increased, so that it becomes difficult to uniformly disperse the core substances in the matrix. Therefore, various attempts have been made so as to obtain a stable powder composition capable of uniformly dispersing a core substance and stable to the temperature and humidity under storage. JP-A-8-38093 describes a method for producing a flavor-containing capsule storable for a long term, using a hydrogenated product of processed starch and sugars as carbohydrate matrices, where the amounts thereof are defined as a mass ratio of 15:85 to 85:15 on a solid content basis. The published Japanese translation of a PCT application (Tokuhyo) 9-507267 describes a method for producing a particulate aromatic composition storable for a long term although the aromatic composition has Tg (glass transition temperature) of ambient temperature or less, using sucrose, glucose, fructose, lactose, maltose, glucopyranosyl mannitol, glucopyranosyl sorbitol, maltodextrin with a DE value of 18 or less and the like as carbohydrate matrices, and adding 5 to 10% of water as a plasticizer.

The European patent application EP 1 023 842 discloses a powder composition containing trehalose and water soluble hemicellulose. Further, the powder composition contains perfumes, coloring agents and functional substances. Due to the high water content of this mixture, the resulting powder composition has a porous structure and core substances such as flavours tend to be exposed to ambient air. This might lead to a deterioration of the flavour.

The PCT patent application WO 99/26485 discloses a chewing gum containing trehalose. As the chewing gums contains a gum base, the chewing gum is not readily dissolved and does not immediately release enclosed flavouring agents when in contact with water.

The PCT application WO 01/89313 discloses an edible product comprising an edible core and a single coating layer wherein the coating layer comprises solid amorphous trehalose. As the core substances are coated with a single trehalose layer individually, the core substances have to have a certain size to be coated with a trehalose layer.

As described above, investigations were made so as to improve the stability of powder compositions, by the selection of materials for carbohydrate mixtures as the base substances of carbohydrate matrices, the adjustment of composition ratios of carbohydrate mixtures, and the adjustment of the amount of plasticizers in carbohydrate matrices. When the amount of plasticizers is reduced so as to improve the stability, however, the molten viscosity of the resulting carbohydrate matrix is so high during the addition of a core substance that the core substance is uniformly mixed together with much difficulty. Currently, not any powder composition containing a practically sufficient amount of a core substance and still having satisfactory stability has been obtained yet. Additional improvement has been desired. A powder composition with these characteristic features and without any attachment onto teeth even when added to foods and drinks such as chewing gum in stick forms and tablet sweets, which can simultaneously satisfy requirements such as good taste, a excellent feature of giving aroma and flavor and a superior feature of enhancing aroma and flavor, is strongly desired.

### Disclosure of the Invention

It is an object of the present invention to provide a powder composition without the known problems and still with the desired features as well as a method for producing the same.

Specifically, it is an Object of the invention to provide a method for the preparation of a powder composition and a powder composition preferable for use as an agent for giving aroma and flavor or an agent for enhancing aroma and flavor, the powder composition with low hygroscopicity, excellent stability under storage, easy ability of uniform dispersion of a core substance, a sufficient amount of a core substance, superior taste and no attachment onto teeth even after addition to gum and tablet sweets.

The present inventors made investigations so as to overcome the problems. The inventors focused their attention to trehalose as one of non-reducing disaccharides, where two D-glucose molecules are bound together via 1,1-bond. The inventors found that using a particular amount of trehalose as a constitutional material of a carbohydrate mixture for a powder composition containing an included core substance could overcome the problems. Thus, the invention has been achieved.

Specifically, the invention provides a method for the preparation of a powder composition and a powder composition comprising a carbohydrate mixture comprising 30 to 70% by mass of treahalose, a plasticizer and a core substance.

Additionally, the invention provides a method for preparing a powder composition, comprising melting a carbohydrate mixture comprising 30 to 70% by mass of trehalose and a plasticizer under heating at 110-200°C, adding a core substance to the resulting molten matter for mixing to obtain a uniform mixture, extruding the uniform mixture while cooling the uniform mixture, for solidification, and cutting or grinding the resulting solid matter.

Furthermore, the invention provides foods and drinks comprising the powder composition.

### Best Mode for Carrying out the Invention

The invention is now described in detail hereinbelow.

In the powder composition of the present invention, a core substance (c) is included in a carbohydrate matrix of a carbohydrate mixture comprising 30 to 70% by mass of trehalose (a) and a plasticizer (b) and other additives, if necessary. The carbohydrate mixture, the plasticizer, the other additives and the core substance are described specifically hereinbelow. Further, the method for producing a powder composition in accordance with the invention is described.

### (a) Carbohydrate mixture

Trehalose as a constitutional material for the carbohydrate mixture of the present invention is a disaccharide first isolated from rye ergot in 1832 and is widely identified in various natural source, for example in fungi, plant Manna, shrimp, insects, and yeast. For human absorption, trehalose is digested by trehalase existing in jejunum and duodenum into glucose, for absorption. Trehalose usable in accordance with the invention includes three isomers, namely α,α-, α,β- and β,β-types. Naturally identifying α,α-trehalose is particularly preferable. Because the amount of the plasticizer can be adjusted owing to the properties of the production steps in accordance with the present invention, usable trehalose may be any of anhydride and hydrates, with no limitation. Further, the sweetness level of trehalose is as low as 45% of that of sugar, so trehalose may be preferably applied to a wide variety of foods and drinks.

Further, trehalose can be produced by a process of culturing yeast in a glucose solution to generate trehalose in yeast and subsequently isolating the resulting trehalose from yeast, or by a process of culturing a bacterium in a glucose solution to generate trehalose in the liquid culture, and isolating trehalose from the liquid culture. Trehalose is also commercially available. Therefore, a commercially available product (for example, "Treha" manufactured by Hayashibara Co., Ltd.) may be used.

In the composition of the invention, the ratio of trehalose blended in the carbohydrate mixture is 30 to 70% by mass, preferably 40 to 65% by mass and more preferably 50 to 60% by mass. When the ratio of trehalose blended therein is less than 30% by mass, the effect of the invention may not be sufficiently exerted. When the ratio exceeds 70% by mass, unpreferably, trehalose deposits in crystal by stimulation such as agitation during the production of the composition or temperature decrease.

As materials constituting the carbohydrate mixture other than trehalose, those which are conventionally used in producing powder compositions by the extrusion method may be used in accordance with the present invention. These materials other than trehalose include monosaccharides, oligosaccharides, sugar alcohols, starches, modified starches, natural gums, cellulose derivatives, proteins and the like. These materials other than trehalose are further described specifically as follows.

For example, monosaccharides include glucose, fructose, xylose and arabinose; oligosaccharides include sucrose, maltose, raffinose, stachyose, and cyclodextrin; sugar alcohols includes reduced palatinose (palatinit) and hydrogenated corn syrup.

Starches include, for example, starch from natural origins, dextrin prepared by hydrolyzing starch, and modified starch prepared by treating and modifying starch with acids or enzymes. Starch from natural origins may be from any natural origins and includes but is not limited to starch produced from corn, wheat, potato, sweet potato and tapioca. When a starch-water paste is hydrolyzed in the presence of acids or enzymes under heating, starch passes through some intermediate products and is finally decomposed to glucose. The intermediate products can be used as dextrin. The hydrolysis level of dextrin is generally expressed as DE. However, dextrin with any specific DE can be used without any specific limitation in accordance with the present invention.

As the starch processed by methods other than those described above, additionally, starch composed of glucose where a specific functional group is added to the hydroxyl group of glucose is also used. For example, the starch includes starch composed of glucose where a functional group is bound via ester bond, specifically including starch in acetate ester form, starch in octenylsuccinic acid form, and starch in phosphate monoester form; starch composed of glucose where a functional group is bound via ether bond, specifically including hydroxypropyl starch; starch composed of glucose where the hydroxyl groups therein are cross-linked together, specifically including phosphate-cross-linked starch; and the like. Besides, starch modified to a low viscosity, oxidized starch and pregelatinized starch form may be used if necessary.

Further, natural gums include, for example, gum arabic, locust bean gum, carrageenan, guar gum, karaya gum, and tragacanth gum; cellulose derivatives include, for example, methyl cellulose and hydroxypropyl cellulose; proteins include, for example, casein, zein, gelatin, whey and isolated soybean protein.

Herein, these are simply shown by way of illustration. Materials for use in the carbohydrate mixture of the invention, other than trehalose, are not limited to these exemplified materials. Additionally, these materials other than trehalose can be used singly or in combination of two or more thereof.

### (b) Plasticizer

In accordance with the invention, a plasticizer is used in order to reduce the viscosity of the carbohydrate mixture during melting. The plasticizer preferably includes, for example, water, glycerin and propylene glycol. These may be used singly or in combination of two or more thereof. The amount of a plasticizer to be blended is generally 0.5 to 50% by mass, preferably 1 to 30% by mass based on the mass of the carbohydrate mixture, when the plasticizer is water. Glycerin or propylene glycol when used as the plasticizer is used generally at 0.5 to 10% by mass, preferably 1 to 6% by mass and more preferably 1.5 to 4% by mass thereof.

### (c) Core substance

In accordance with the present invention, the core substance to be included in the carbohydrate matrix is any of core substances for conventional use in the extrusion method or the microencapsulation method. The core substance particularly preferable for use in accordance with the present invention includes a substance which is required to prevent its deterioration due to hygroscopicity, caking, component evaporation, component change, color modification or color fading and which is preferably released in the presence of water during ingestion or in case of addition to foods or drinks. Such core substance includes, for example, flavor compositions, color materials, acidulants, vitamins, seasoning, spice, functional substances, or mixtures thereof. These substances preferable for use as the core substance in accordance with the invention are described below specifically.

As the flavor composition, first, any of flavor compositions for conventional use in producing powdery flavor can be selected. Specifically, the flavor composition includes, for example, but is not limited to citrus flavor from orange, lemon, grape fruit and the like, fruit flavor from apple, banana, grape, peach, strawberry, pineapple and the like, mint flavor of peppermint, spearmint and the like, spice flavor for example pepper, cinnamon, nutmeg and clove, nut flavor from vanilla, coffee, cocoa, hazel nut and the like, tea flavor from tea, green tea and the like, flavor from meat or seafood, such as beef, chicken, salmon, crab and the like, and dairy flavor from milk, cheese and the like. As the flavor, further, not only composite flavor but also essential oils and oleoresin as active components extracted from some flavor types are also used. Still further, the flavor includes synthetic flavor such as citral, geraniol, 1-menthol and vanillin. Additionally, flavor prepared by mixing them at an appropriate ratio can be used as well. Additionally, aroma components from coffee, tea (e.g., black tea), fishery products (e.g., dried bonito fillet), and naturally occurring fruit juices, as obtained by steam distillation and super-critical fluid extraction, may be used.

As the color material, any edible color material is satisfactory with no specific limitation, in case that the powder composition of the present invention is to be used in foods and drinks. Such edible color material includes, for example, naturally occurring color materials such as β-carotene, paprika color material, anatol color material and oil-soluble color materials such as chlorophyll, water-soluble naturally occurring color materials such as cochineal and those from gardenia, grape skin, red malt and the like, and synthetic color materials. When the powder composition of the present invention is to be used for the cases other than foods or drinks, apparently, color materials usable are not limited to edible color materials. Depending on the use and the like, these may be used in combination of two or more.

The acidulant includes, for example, citric acid, fumaric acid, dl-malic acid and ascorbic acid. Depending on the use and the like, these may be used in combination of two or more thereof.

The vitamins include, for example, vitamin B1, vitamin A, vitamin D, lipoacid, nicotinic acid, vitamin L, vitamin K, or salts thereof such as sodium salts thereof, hydrochloride salts thereof, and derivatives thereof such as acetate ester thereof. These vitamins may be used singly or in combination of two or more thereof.

The seasoning includes, for example, chemical seasoning such as sodium glutamate and nucleic acid seasoning, and seasoning obtained by extraction or decomposition of naturally occurring food materials. These seasoning types may be used singly or in combination of two or more thereof.

The spice includes, for example, acrid spices such as clove, garlic and cinnamon, herb spices such as basil and parsley, and seed spices such as cumin and anise. These spices may be used singly or in combination of two or more thereof.

The functional substance (for example, a substance with biological controlling action) includes, for example, perilla extract, polyphenol from buckwheat (Japanese soba plant), chitin, chitosan, propolis, royal jelly, or fish oils such as DHA and EPA, linoleic acid, linolenic acid, and crude drug powders from carrot and aloe. These functional substances may be used singly or in combination of two or more thereof. Additionally, extract solutions from tea leaves of green tea and black tea, coffee beans and dried fish fillets such as dried bonito fillet, or concentrate solutions and powdery dried products from them, and powder products prepared by grinding tea leave, coffee beans and dried fish fillets themselves can also be used as the core substance.

Among these specific examples listed as the core substance, the flavor compositions are particularly preferable.

The ratio of the core substance to be added to a carbohydrate matrix depends on the ratio of a plasticizer contained in the core substance, the composition of the carbohydrate matrix, the state of the core substance at ambient temperature (liquid or solid). Generally, the ratio is preferably 0.01 to 25% by mass, more preferably 1 to 15% by mass. When the ratio is less than 0.01% by mass, the effect of the core substance may sometimes not be procured. When the ratio is more than 25% by mass, sometimes, no structure can be made or any structure produced cannot be retained.

### (d) Other additives

When the core substance is added to the carbohydrate matrix in the composition of the present invention, additives such as emulsifiers and antioxidants may be added, if necessary. As the emulsifiers, for example, sucrose fatty acid ester, polyglycerol fatty acid ester, sorbitan fatty acid ester, propylene glycol fatty acid ester, lecithin, and saponins are preferable, but any emulsifiers for use in producing foods may be used, with no limitation to those described above. In case of addition of an emulsifier, the amount thereof is not specifically limited and, generally, the amount is 0.1 to 3% by mass based on the mass of the core substance.

The antioxidants include, for example, vitamin C, vitamin E, rosemary extract, sage extract, sodium 1-sorbate, and 2,6-di-t-butyl-4-methylphenol. When an antioxidant is added, the amount thereof is not particularly limited, and the amount thereof may be about 0.1 to 2% by mass based on the mass of the core substance.

### (e) Production process

The production method of the present invention is described in detail.

The process of including the core substance in the carbohydrate matrix containing trehalose may be any known process, which includes batchwise process and continuous process.

According to the batchwise process, for example, water is added to constitutional materials of a carbohydrate mixture at 15 to 50% by mass based on the total mass of the constitutional materials and the resulting mixture is dissolved under heating. The amount of water to be added is not specifically limited to the range described above. When the amount of water added is too small, however, it is very difficult to uniformly heat the mixture. When the amount of water is too much, alternatively, it requires a longer time to reduce the water content under heating. Additionally, such amount is not preferable in terms of energy efficiency. Heating is done in a cooking vessel or the like until the amount of water in the molten carbohydrate matrix reaches about 0.5 to 10% by mass, more preferably about 1 to 6% by mass. The heating temperature then depends on the composition of the carbohydrate matrix, but is within a range of about 110 to 200°C, more preferably within a range of about 120 to 170°C. When the content of residual water in the carbohydrate matrix is too much, the water content in the resulting powder composition is higher, so that the stability to water and temperature is deteriorated, which is not preferable. When the content of residual water is too small, the viscosity of the molten carbohydrate matrix is increased, so that it becomes difficult to uniformly disperse the core substance, which is not preferable. When a plasticizer other than water as the plasticizer is used in combination, the content of water can be reduced, compared with the case of single use of water as the plasticizer, so that the molten viscosity of the carbohydrate matrix can be decreased.

The core substance is then added to the resulting molten matter. Simultaneously, other additives may be added if necessary. After agitating the resulting mixture with an agitation apparatus such as high-speed agitator or line mixer to prepare a uniformly dispersed mixture while the matrix is at a molten state, the resulting uniform mixture containing the core substance is charged in a sealed container and is then extruded from an ejection opening (die) under pressure. The shape of the extruded solid matter may be variable, depending on the shape of the orifice. Generally, the solid matter is prepared into a bar-, plate- or line-like shape.

By the continuous process, alternatively, single-axial or twin-axial extruder or kneader including a pressure-resistant container with extrusion screw or extrusion plate is used, where heating, mixing and extrusion can be done in one container. The extruder includes, for example, KEXP extruder manufactured by Kurimoto Technical Industry Co., Ltd.

In the machine for use in the continuous process, the carbohydrate mixture, the plasticizer, the core substance and the like are introduced through a constant weight feeder unit into the pressure-resistant container, where these components are heated and mixed together (kneaded together) and subsequently extruded. The heating temperature depends on the composition of the carbohydrate mixture and the amount of the plasticizer, but is within a range of about 80 to 170°C. Additionally, the core substance may be introduced via a feeding opening located in between a material feeding opening and a product discharge opening of the pressure-resistant container, after the carbohydrate mixture and the plasticizer are heated and mixed together, so that the carbohydrate mixture is molten.

After extrusion, the core substance-containing carbohydrate mixture is cooled and solidified. By rapid cooling and solidification then, a glassay powder composition in an amorphous state with no crystallization of the molten matter, can be obtained. The solidification and cooling process can be done by general methods for glassification for food products, with no specific limitation. For the cooling process, liquid solvents with no hazards in terms of food sanitation, for example cooled ethanol may be used or gases, for example, air and nitrogen may satisfactorily be used. In case that a liquid solvent is used for cooling, the solvent can be removed with an appropriate dryer for example conical blender after grinding.

The solidified carbohydrate matrix containing the core substance is grinded or cut using an appropriate grinder, for example, CoMill (manufactured by Quadro) and ball mill, to obtain the powder composition containing the core substance in accordance with the invention. The particle size of the powder composition varies depending on the object of the use thereof. Generally, however, the particle size is 50 to 3,000 µm, preferably 100 to 1,000 µm.

Because the powder composition of the present invention has a low hygroscopicity and has great stability under storage, the powder composition can be used as an agent for giving aroma and flavor or an agent for enhancing aroma and flavor in a wide range of foods and drinks, for example tea bag, powder drinks, powder soup, powder dessert, candies, gums, tablet sweets, ice cream or cookies. Additionally, the use of the powder composition of the present invention is not limited to foods and drinks. Rather, the powder composition may be used in appropriate uses such as fragrance and cosmetic products such as cosmetics other than foods or drinks.

The amount of the powder composition of the present invention to be added for various uses varies depending on the purpose of the use thereof, the composition of the powder to be added, and the embodiment of the use of an article to which the powder is to be added. In other words, the amount should be an amount within a range so as to obtain the intended effect through the addition of the powder composition of the invention. For example, a case of adding the composition of the invention to foods and drinks is now described. The amount thereof significantly varies, depending on the type of the powder composition and the type of a food or drink to which the composition is to be added. Generally, the amount is within a range of 0.01 to 5% by mass of the total of the food or drink, preferably a range of 0.1 to 3% by mass of the total thereof.

### Examples

The invention is now described in detail in the following Examples. However, the invention is never limited by these Examples.

### Example 1

360 g of trehalose (manufactured by Hayashibara Co., Ltd.), 330 g of palatinit (manufactured by Palatinit), and 29 g of modified starch (manufactured by National Starch and Chemical) were dissolved in 200 g of ion exchange water, and heated to a boiling temperature of 135°C under agitation at 100 rpm with a three-one motor (manufactured by HEIDON), to obtain a molten matter. 75 g of orange oil (manufactured by Takasago International Corporation) was added to the molten matter, under agitation with a high-speed agitator (manufactured by Tokushu Kika Kogyo Co., Ltd.), for 20-minute emulsification. The resulting emulsion was transferred into an extrusion cylinder and then extruded under pressure from the ejection opening into a cooling tank placing therein isopropyl alcohol at -25°C, for grinding under agitation. The resulting grinded matter was dried under reduced pressure at 40°C, using a rotary evaporator, to remove isopropyl alcohol on the surface of the particle. The powder composition after drying was sieved so as to pass through a 20-mesh sieve (at a sieve opening of 840 µm) and be left on a 60-mesh sieve (at a sieve opening of 250 µm) The powder composition of 480 g as left on the 60-mesh sieve was obtained.

### Comparative Example 1

In the same manner as in Example 1 except for the use of 360 g of sucrose in place of trehalose, a powder composition of 400 g as left on the 60-mesh sieve was obtained.

### Comparative Example 2

In the same manner as in Example 1 except for the composition of the carbohydrate mixture, which was composed of 540 g of palatinit (manufactured by Palatinit), 144 g of dextrin (DE = 8; manufactured by Matsutani Chemical Industry Co., Ltd.) and 36 g of modified starch (manufactured by National Starch and Chemical) and except for the boiling temperature set at 145°C, a powder composition of 500 g as left on the 60-mesh sieve was obtained.

### Comparative Example 3

In the same manner as in Example 1 except for the composition of the carbohydrate mixture, which was composed of 391 g of sucrose and 337 g of dextrin (DE = 8; manufactured by Matsutani Chemical Industry Co., Ltd.) and except for the boiling temperature set at 125°C, a powder composition of 430 g as left on the 60-mesh sieve was obtained.

### Comparative Example 4

400 parts by mass of sucrose and 327 parts by mass of dextrin (DE = 8; manufactured by Matsutani Chemical Industry Co., Ltd.) were mixed together, to obtain a powder mixture. Feeding individually the powder mixture at a speed of 70 g/min, ion exchange water at 8 g/min and lemon oil (manufactured by Takasago International Corporation) at 2.4 g/min into a kneader heated at 100°C, for melting and kneading, a molten carbohydrate matter was prepared, which was then extruded, cooled and solidified. Grinding the resulting solidified matter with a mill and sieving the grinded matter so as to pass through a 20-mesh sieve and be left on a 60-mesh sieve, a powder composition of 220 g as left on the 60-mesh sieve was obtained.

### Comparative Example 5

In the same manner as in Comparative Example 4 except for the use of dextrin of DE = 19 (manufactured by Matsutani Chemical Industry Co., Ltd.) in place of the dextrin in Comparative Example 4 and except for the speed of feeding water as set at 4.2 g/min, a powder composition of 190 g as left on the 60-mesh sieve was obtained.

### Comparative Example 6

576 g of trehalose (manufactured by Hayashibara Co., Ltd.), 118 g of palatinit (manufactured by Palatinit), and 26 g of modified starch (manufactured by National Starch and Chemical) were dissolved in 250 g of ion exchange water, and agitated at 100 rpm with a three-one motor (manufactured by HEIDON). At 122°C, trehalose crystallized and lost its fluidity, so that a liquid core substance could not be included in the carbohydrate matrix.

### Example 2

The powder composition of Example 1 was added to a chewing gum base composed of 20 parts by mass of gum base, 66 parts by mass of powder sugar and 14 parts by mass of corn syrup, to 0.4% by mass of the chewing gum base. After flavoring, the chewing gum base was kneaded at about 40°C for 10 minutes and spread, to prepare a stick chewing gum at 3 g/stick.

### Comparative Examples 7 through 11

In the same manner as in Example 2 except for the use of the individual compositions of Comparative Examples 1 through 5 in place of the powder composition of Example 1, stick chewing gums of Comparative Examples 7 through 11 were obtained.

### <Storage test 1 of powder compositions>

The powder compositions prepared in Example 1 and Comparative Examples 1 through 5 were stored in a thermostat with a constant humidity as set at 50°C and a relative humidity of 75%, for 12 hours. After storage, the states of the powder compositions were observed. The powder compositions of Comparative Examples 3 through 5 were caked and could not retain their powder states. Alternatively, the powder compositions of Example 1 and Comparative Examples 1 and 2 retained sufficient powder fluidity.

### <Storage and sensory tests of stick chewing gums>

Stick chewing gums obtained in Example 2 and Comparative Examples 7 through 11 were stored in a thermostat with a constant humidity as set at 50°C and a relative humidity of 75% for 12 hours. After storage, the states of the stick chewing gums were observed, while their sensory evaluation was done. The sensory evaluation was done as follows. Expert panelists chewed the stick chewing gums for 5 minutes, to assess the expression of the aroma and the chewing texture of the stick chewing gums.

The stick chewing gum of Example 2 showed no apparent change even after storage under the conditions. After 5-min chewing, it was observed that the expression of aroma due to orange was sufficient, involving no aromatic deterioration.

Compared with the stick chewing gum of Example 2, the expression of aroma in the stick chewing gums of Comparative Examples 7 and 8 was poor.

Concerning the attachment onto teeth, the stick chewing gum of Example 2 showed great chewing texture, but the stick chewing gums of Comparative Examples 7 and 8 showed strong attachment onto teeth, unpreferably organoleptically.

Further, the stick chewing gums of Comparative Examples 9 through 11 were highly deteriorated during storage, so they could not be subjected to any sensory test.

### Example 3

410 g of trehalose (manufactured by Hayashibara Co., Ltd.) and 320 g of palatinit (manufactured by Palatinit) were dissolved in 200 g of ion exchange water, and heated to a boiling temperature of 140°C, to obtain a molten carbohydrate matter. 72 g of powdered tea (manufactured by Aiya) was added to the molten carbohydrate matter, for mixing for 5 minutes, to uniformly disperse the tea powder in the molten matter. Subsequent steps were done in the same manner as in Example 1, to obtain 390 g of a powder composition left on the 60-mesh sieve. The resulting powder composition was vivid green derived from the powdered tea.

Under the same conditions as in the storage test 1, a storage test was done. Even after storage, the powder composition retained sufficient powder fluidity.

### Example 4

In the same manner as in Example 2 except for the use of the powder composition of Example 3 in place of the powder composition of Example 1, a stick chewing gum was prepared. Storage and sensory tests about the resulting stick chewing gum were done in the same manner as described above.

The stick chewing gum of Example 4 showed no apparent change even after storage. After 5-min chewing, it was observed that the expression of aroma due to powdered tea was sufficient, involving no aromatic deterioration. The stick chewing gum of Example 4 showed good chewing texture with no attachment onto teeth.

### Example 5

430 g of trehalose (manufactured by Hayashibara Co., Ltd.) and 290 g of powdery starch syrup (DE = 20; manufactured by Futamura Chemical Industries Co., Ltd.) were dissolved in 200 g of ion exchange water, and heated to a boiling temperature of 129°C, to obtain a molten carbohydrate matter. Using 80 g of lemon oil (manufactured by Takasago International Corporation) as the core substance, while the remaining conditions were the same conditions as in Example 1, a powder composition of 355 g as left on the 60-mesh sieve was recovered.

### Example 6

In the same manner as in Example 1 except for the composition of the carbohydrate mixture, which was composed of 360 g of trehalose, 335 g of raffinose (manufactured by Nippon Beet Sugar Manufacturing Co., Ltd.) and 29 g of processed starch, a powder composition of 450 g as left on the 60-mesh sieve was obtained.

### Example 7

In the same manner as in Example 1 except for the composition of the carbohydrate mixture, which was composed of 360 g of trehalose, 335 g of palatinose (manufactured by Mitsui Sugar Co., Ltd.) and 29 g of modified starch, a powder composition of 470 g as left on the 60-mesh sieve was obtained.

### Example 8

In the same manner as in Example 1 except for the composition of the carbohydrate mixture, which was composed of 360 g of trehalose, 335 g of maltitose (manufactured by Towa Chemical Industry Co., Ltd.) and 29 g of modified starch and except for the boiling temperature set at 140°C, a powder composition of 470 g as left on the 60-mesh sieve was obtained.

### Example 9

In the same manner as in Example 1 except for the composition of the carbohydrate mixture, which was composed of 360 g of trehalose, 236 g of dextrin (DE = 8; manufactured by Matsutani Chemical Industry Co., Ltd.) and 127 g of xylitol (manufactured by Carter Food Science) and except for the boiling temperature set at 130°C, a powder composition of 420 g as left on the 60-mesh sieve was obtained.

### <Storage test 2 of powder compositions>

The powder compositions obtained in Examples 5 through 9 were subjected to a storage test at ambient temperature (20 to 30°C) for 30 days. All of the powder compositions retained sufficient powder fluidity after storage. Additionally, the powder compositions after storage were chewed. The compositions had organoleptically sufficient flavor intensities.

### <Oil content test>

The oil contents of the powder compositions obtained in Examples 6 through 9 were assayed by the Essential Oil Assay Method (JP 13, Methods of Analysis of Herb Drugs B-223 to 224). The results shown in Table 1 below were obtained, which indicates that sufficient amounts of the core substances were contained in the powder compositions.

**Table 1**

| | Example 6 | Example 7 | Example 8 | Example 9 |
|---|---|---|---|---|
| Oil content (v/w %) | 7.8 | 7.4 | 7.2 | 6.0 |

Additionally, the core substance in any of the individual powder compositions obtained in Examples 1, 3, 5 and through 9 was highly greatly dispersed uniformly. When the powder compositions of the individual Examples were added to tablet sweets, the resulting tablet sweets had great storage stability and superior taste, with no attachment onto teeth, as in the case of stick chewing gums.

### Industrial Applicability

As described above in detail, a powder composition having low hygroscopicity, great storage stability, easy uniform dispersion of a core substance, a sufficiently high content of the core substance, and excellent taste without attachment onto teeth even after addition to chewing gum or tablet sweets can be obtained, which is preferable for use as an agent for giving aroma and flavor or an agent for enhancing aroma and flavor, by using a specific amount of trehalose as a constitutional material of a carbohydrate mixture for preparing the powder composition containing the core substance.

Additionally, the effect is also observed when the powder composition of the invention is added to various products. The products with addition of the powder composition have no apparent change or quality deterioration of the products themselves, have excellent storage stability and additionally allows desirable original properties of the core substance to be sufficiently exerted even after long-term storage.

## Claims

1. A method for preparing a powder composition, comprising melting a carbohydrate mixture comprising 30 to 70% by mass of trehalose and a plasticizer under heating at 110 to 200°C to form a molten matter of a matrix of the carbohydrate mixture and the plasticizer, adding a core substance to the resulting molten matter for mixing to obtain a uniform mixture, extruding the uniform mixture while cooling the uniform mixture, for solidification, and cutting or grinding the resulting solid matter.

2. The method according to claim 1, wherein the carbohydrate mixture further comprises at least one member selected from monosaccharides, oligosaccharides, sugar alcohols, starches, modified starches, natural gums, cellulose derivatives, and proteins.

3. The method according to claim 1 or 2, wherein the plasticizer is at least one member selected from water, glycerin and propylene glycol.

4. The method according to any one of claims 1 through 3, wherein the core substance is a flavor composition, a color material, an acidulant, a vitamin, a seasoning, a spice, and a functional substance, or a mixture thereof.

5. The method according to any one of claims 1 through 4, wherein the extrusion is carried out with an extruder.

6. The method according to any one of claims 1 through 5, wherein the core substance is in an amount of 0.01 to 25% by mass based on the matrix.

7. A powder composition obtained by the method according to any of the claims 1-6.

8. The powder composition according to claim 7, wherein the powder composition has a particle size of 50 to 3,000 µm.

9. Foods and drinks comprising a powder composition according to any one of claims 7 through 8.

## Patentansprüche

1. Verfahren zum Herstellen einer Pulverzusammensetzung umfassend das Schmelzen einer Kohlenhydratmischung, die 30-70 Gew.-% Trehalose und ein Plastifizierungsmittel umfasst, unter Erwärmen auf 110-200°C, um einen geschmolzenen Gegenstand aus einer Matrix der Kohlenhydratmischung und des Plastifizierungsmittels auszubilden, Zugeben einer Kemsubstanz zu dem resultierenden geschmolzenen Gegenstand zum Vermischen, um eine einheitliche Mischung zu erhalten, Extrudieren der einheitlichen Mischung, während die einheitliche Mischung zum Verfestigen gekühlt wird, und Schneiden oder Mahlen des resultierenden festen Gegenstand.

2. Verfahren gemäß Anspruch 1, wobei die Kohlenhydratmischung des Weiteren mindestens ein Element umfasst, ausgewählt aus Monosacchariden, Oligosacchariden, Zuckeralkoholen, Stärken, modifizierten Stärken, natürlichen Gummen, Zellulosederivaten und Proteinen.

3. Verfahren gemäß einem der Ansprüche 1 oder 2, wobei das Plastifizierungsmittel mindestens ein Element ist, ausgewählt aus Wasser, Glycerin und Propylenglykol.

4. Verfahren gemäß einem der Ansprüche 1-3, wobei die Kemsubstanz eine Aromazusammensetzung, ein Färbematerial, ein Säuerungsmittel, ein Vitamin, ein Würzmittel, ein Gewürz und eine funktionelle Substanz oder deren Mischung ist.

5. Verfahren gemäß einem der Ansprüche 1-4, wobei die Extrusion mit einem Extruder durchgeführt wird.

6. Verfahren gemäß einem der Ansprüche 1-5, wobei die Kernsubstanz in einer Menge von 0,01 bis 25 Gew.-% basierend auf der Matrix vorliegt.

7. Pulverzusammensetzung, die durch das Verfahren gemäß einem der Ansprüche 1-6 erhältlich ist.

8. Pulverzusammensetzung gemäß Anspruch 7, wobei die Pulverzusammensetzung eine Partikelgröße von 50 bis 3000 µm besitzt.

9. Nahrungsmittel und Getränke, die eine Pulverzusammensetzung gemäß einem der Ansprüche 7-8 umfassen.

## Revendications

1. Procédé pour la préparation d'une composition en poudre, comprenant les étapes consistant à faire fondre un mélange d'hydrate de carbone comprenant de 30 à 70 % en masse de tréhalose et un plastifiant en chauffant à une température de 110 à 200°C pour former une matière fondue d'une matrice du mélange d'hydrate de carbone et du plastifiant, à ajouter une substance de coeur à la matière fondue résultante, à mélanger pour obtenir un mélange uniforme, à extruder le mélange uniforme tout en refroidissant le mélange uniforme, pour la solidification, et à découper ou broyer la matière solide résultante.

2. Procédé selon la revendication 1, dans lequel le mélange d'hydrate de carbone comprend en outre au moins un élément choisi parmi les monosaccharides, les oligosaccharides, les alcools de sucre, les amidons, les amidons modifiés, les gommes naturelles, les dérivés cellulosiques, et les protéines.

3. Procédé selon la revendication 1 ou 2, dans lequel le plastifiant est au moins un élément choisi parmi l'eau, la glycérine et le propylène glycol.

4. Procédé selon l'une quelconque des revendications 1 à 3, dans lequel la substance de coeur est une composition aromatisante, une matière colorante, un acidulant, une vitamine, un condiment, une épice, et une substance fonctionnelle, ou un mélange de ceux-ci.

5. Procédé selon l'une quelconque des revendications 1 à 4, dans lequel l'extrusion est conduite avec une extrudeuse.

6. Procédé selon l'une quelconque des revendications 1 à 5, dans lequel la substance de coeur est dans une quantité de 0,01 à 25 % en masse en se basant sur la matrice.

7. Composition en poudre obtenue par le procédé selon l'une quelconque des revendications 1 à 6.

8. Composition en poudre selon la revendication 7, dans laquelle la composition en poudre a une taille de particule de 50 à 3 000 µm.

9. Aliments et boissons comprenant une composition en poudre selon l'une quelconque des revendications 7 à 8.
